(19) Europäisches Patentamt

European Patent Office

Office européen des brevets

(11) Veröffentlichungsnummer: **0 516 071 A2**

# (12) EUROPÄISCHE PATENTANMELDUNG

(21) Anmeldenummer: **92108923.1**

(22) Anmeldetag: **27.05.92**

(51) Int. Cl.5: **B28D 1/08**, B28D 7/00, B23D 53/00, B23D 57/00

(30) Priorität: **29.05.91 DE 4117687**

(43) Veröffentlichungstag der Anmeldung: **02.12.92 Patentblatt 92/49**

(84) Benannte Vertragsstaaten: **AT DE ES FR GB IT**

(71) Anmelder: **MVZ MASCHINENBAU UND VERZAHNUNGSTECHNIK, JOHANNES FALKENSTEIN** Zeppelinstrasse 16

W-7953 Bad Schussenried(DE)

(72) Erfinder: **Falkenstein, Johannes** **Zeppelinstrasse 16** **W-7953 Bad Schussenried(DE)**

(74) Vertreter: **Patentanwälte Dipl.-Ing. E. Eisele** **Dr.-Ing. H. Otten** **Seestrasse 42** **W-7980 Ravensburg(DE)**

(54) **Sägemaschine.**

(57) Es wird eine Bandsägemaschine, insbesondere zur Bearbeitung von schweren Natursteinblöcken o. dgl., vorgeschlagen, die aus einer Bandsäge (2) und einem Bearbeitungstisch bzw. einer Bearbeitungsplattform (3, 14) besteht, wobei sowohl die Bandsäge (2) als auch die Bearbeitungsplattform für die Auflage des Werkstücks mittels Kreuztischführungen (8, 15) verfahrbar sind. Um neben einer Sägebearbeitung mittels des Sägewerkzeugs (7) weitere Bearbeitungsmöglichkeiten vorzusehen, ist eine zusätzliche Bearbeitungseinheit (21) mit Bohr- oder Fräswerkzeugen vorgesehen

Fig 1

Die Erfindung betrifft eine Sägemaschine nach dem Oberbegriff des Anspruchs 1.

Stand der Technik:

Aus der WO 88/03860 ist eine Bandsägemaschine nach dem Oberbegriff des Anspruchs 1 bekannt geworden, bei welcher die Bandsäge auf einer Kreuztischführung in einer Horizontalebene verfahrbar gelagert ist. Hierdurch wird eine optimale Bewegungsfreiheit erzielt, so daß auch in Verbindung mit einer Kreuztischführung für die Auflage des Werkstücks auf eine Bearbeitungsplattform beliebige Konturen gesägt werden können. Dabei kann eine derartige Bandsägemaschine mit einem Schneidzähne aufweisenden Sägeblatt oder einem umlaufenden, diamantbestückte Schneidperlen aufweisenden Sägeseil bestückt werden. Derartige Maschinen eignen sich insbesondere zur Bearbeitung von schweren Natursteinblöcken, wie Grabsteine o. dgl. oder anderen schweren Gegenständen, wobei der schwere Gegenstand nur einmal auf der Bearbeitungsplattform eingerichtet werden muß. Sämtliche Bewegungen können dann mittels den vorgesehenen Bewegungsachsen in X-, Y- und in Z-Richtung - letzteres insbesondere für die Bearbeitungsplattform - durchgeführt werden.

Aus der DE-C 47 295 ist eine ähnliche Bandsägeeinrichtung bekannt geworden, bei welcher die Bandsäge selbst quer und längs zur Schnittrichtung, d. h. in einer Horizontalebene, verschoben werden kann. Mit einem zusätzlichen Drehteller für das Werkstück können ebenfalls Kurvenschnitte oder Parallelschnitte am Werkstück durchgeführt werden.

Aus der US-A 2 774 131 ist darüber hinaus eine Bandsägemaschine mit einer Bearbeitungsplattform für das aufzulegende Werkstück bekannt geworden, wobei die Bearbeitungsplattform als Kreuztisch ausgebildet ist und der Kreuztisch selbst auf einem Drehteller gelagert ist. Auch hiermit können verschiedene Kurvenschnitte oder Linearschnitte am Werkstück durchgeführt werden. Dabei kann die Verwendung eines Sägeseils zur Bearbeitung der Steinmaterialien an derartigen Maschinen von Vorteil sein. Hierzu wird auf die WO 88/07427 der Anmelderin verwiesen.

Vorteile der Erfindung:

Die erfindungsgemäße Sägemaschine stellt eine konsequente Weiterentwicklung der Bandsägemaschine gemäß WO 88/03860 dar. Bislang wurde eine derartige Bearbeitungseinrichtung ausschließlich zum Sägen bzw. zur Bearbeitung des Werkstücks mittels des in der Bandsäge eingespannten Werkzeugs verwendet. Dabei konnten aufgrund hoher Beweglichkeit in den verschiedensten Achsen komplizierte Schnitte und mittels des Einsatzes beispielsweise eines diamantbestückten Sägeseils auch gewisse schleifende Konturbearbeitungen vorgenommen werden. Diese Bearbeitungen bezogen sich jedoch ausschließlich auf eine Bearbeitung durch das umlaufende Sägewerkzeug. Sofern ein weiterer Bearbeitungsvorgang am Werkstück erforderlich war, mußte das gesamte Werkstück einer anderen Bearbeitungsmaschine zugeführt werden. Der Vorteil der vorliegenden Erfindung liegt nun darin, auch weitere, vom Sägen unabhängige Bearbeitungen an der gleichen Maschine durchzuführen. Dies sind insbesondere Bohrarbeiten oder Fräsarbeiten am Werkstück. Dabei wird die ohnehin vorzügliche Beweglichkeit sowohl der Bandsäge als auch der Bearbeitungsplattform dazu verwendet, die weiteren Bearbeitungsschritte durchzuführen. Das ggf. sehr schwere Werkstück braucht demnach nicht mehr zu einer anderen Bearbeitungsmaschine transportiert zu werden, d. h. die Aufspannung auf den Bearbeitungstisch mit genauer Justierung und Einrichtung kann für weitere Bearbeitungsvorgänge unmittelbar verwendet werden. Dies hat insbesondere dann einen Vorteil, wenn die Bearbeitung über numerisch gesteuerte Bearbeitungsachsen erfolgen soll, die eine genaue Aufspannung des Werkstücks und ein entsprechendes Ausrichten erforderlich machen.

Der erfindungsgemäßen Sägemaschine liegt deshalb der Kerngedanke zugrunde, eine Einrichtung zu schaffen, mit welcher außer dem Sägen auch andere materialabtragende Bearbeitungsverfahren, wie Fräsen, Bohren, Drehen o dgl., möglich sind. Hierzu wird an einer Sägemaschine ein entsprechendes Zusatzaggregat mit entsprechender Steuerung derart angeflanscht, daß die Bewegungsachsen für weitgehend alle Bearbeitungsvorgänge gemeinsam verwendet werden können. Hiermit werden völlig neue Perspektiven in Richtung einer Universal-Bearbeitungsmaschine für derartige Werkstücke eröffnet.

In den Unteransprüchen sind vorteilhafte und zweckmäßige Weiterbildungen des im Hauptanspruch angegebenen Kerngedankens wiedergegeben.

Besonders vorteilhaft ist die Ausgestaltung der Bearbeitungseinheit, beispielsweise als Revolverkopf mit Mehrfachwerkzeugbestückung. Dabei ist die Bearbeitungseinheit grundsätzlich als selbständig angetriebenes Bearbeitungsorgan ausgebildet, wobei seine Bewegungen jedoch in Verbindung mit den Bewegungen der Bandsäge koordiniert werden. Die ohnehin vorhandenen Bewegungsachsen werden deshalb weitgehend für ein für Bandsägen völlig neuartiges Bearbeitungsmittel verwendet, so daß sich an ein und derselben Bearbeitungsmaschine die verschiedensten Bearbeitungsvorgänge durchführen lassen. Hierfür ist es auch vorteilhaft, daß die Bearbeitungseinheit selbst an einem ausfahrbaren Teleskoparm befestigt ist, der die Bewegungsrichtung der angetriebenen Bearbeitungseinheit in eine Y-Achse ermöglicht. Dies ist zweckmäßig, um die Bearbeitungseinheit gegenüber dem Werkstück derart verfahren zu können, daß das Sägewerkzeug nicht störend die Bearbeitung beeinträchtigt. Würde nämlich die Bearbeitungseinheit in das stationäre Werkstück in Y-Richtung einfahren, so könnte das Sägewerkzeug ab einer bestimmten Stelle störend im Wege sein.

Vorteilhaft ist weiterhin, daß entweder die Bearbeitungseinheit oder auch die Bearbeitungsplattform in Z-Richtung verfahrbar angeordnet sind, um beispielsweise beim Bohren in das Werkstück eindringen zu können. Weiterhin ist dies zur richtigen Positionierung eines in einer Horizontalebene verfahrbaren Fräsers erforderlich.

In Weiterbildung der Erfindung ist vorgesehen, daß die Bearbeitungseinheit auch in einer Vertikalebene schwenkbar gelagert ist. Hierdurch kann das Werkzeug auch schräg in das Werkstück eindringen.

Es ist weiterhin vorteilhaft, daß der Bearbeitungstisch bzw. die Bearbeitungsplattform ebenfalls auf einem X-Y-Kreuztisch in einer Horizontalebene verfahrbar und - wie angegeben - in einer Z-Richtung höhenverstellbar sowie drehbar gelagert ist. In Verbindung mit der entsprechenden Beweglichkeit auf einem X-Y-Kreuztisch der Bandsäge selbst können die verschiedensten Bearbeitungsvorgänge durchgeführt werden.

Sämtliche Bearbeitungsachsen können einzeln oder in Zusammenwirkung numerisch gesteuert sein.

In Ausgestaltung der Erfindung ist weiterhin vorgesehen, daß das Werkstück in eine Art Bakkenfutter für eine Drehbewegung um eine horizontale Drehachse einspannbar ist, wobei das Werkstück vorzugsweise parallel zur X-Achse als Drehachse ausgerichtet ist.

Schließlich kann anstelle einer Fräseinheit auch ein zusätzliches Kreissägeblatt installiert sein, um Spezialschnitte durchführen zu können.

Weitere Einzelheiten der Erfindung sind in den Zeichnungen dargestellt und in der nachfolgenden Beschreibung eines vorteilhaften und zweckmäßigen Ausführungsbeispiels näher erläutert. Es zeigen

Fig. 1 eine perspektivische Ansicht der Bandsägemaschine mit erfindungsgemäßer Bearbeitungseinheit,

Fig. 2 eine schematische Darstellung der Bandsägemaschine nach Fig. 1 in Seitenansicht mit Bandsäge und Bearbeitungstisch und

Fig. 3 eine Draufsicht des Bearbeitungstisches nach Fig. 2.

Beschreibung der Erfindung:

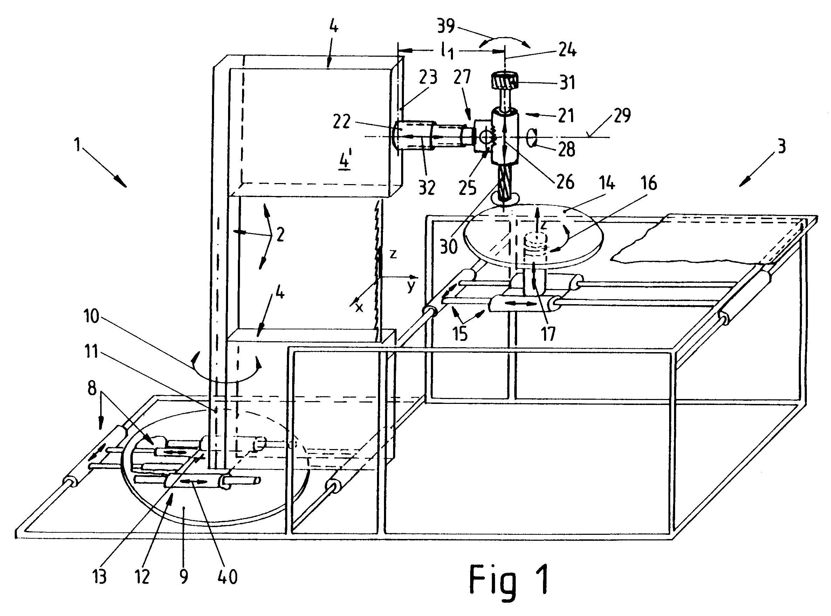

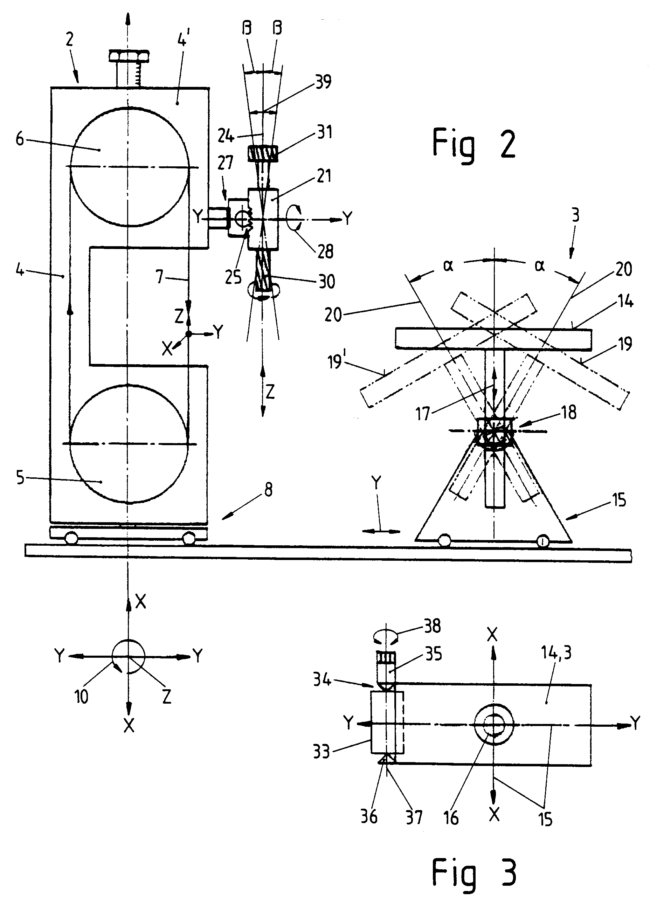

Die in Fig. 1 in perspektivischer sowie in Figuren 2 und 3 in Seitenansicht bzw. Draufsicht dargestellte Bandsägemaschine 1 entspricht in ihrem grundsätzlichen Aufbau derjenigen, wie sie in der WO 88/03860, insbesondere Figuren 1 und 2, dargestellt und in der entsprechenden Beschreibung beschrieben ist. Auf diese Vorveröffentlichung wird deshalb vollinhaltlich in der vorliegenden Anmeldung Bezug genommen. Die Bandsägemaschine 1 besteht hierbei aus der eigentlichen Bandsäge 2 und einem davor angeordneten Bearbeitungstisch 3. Die Bandsäge 2 weist in einem Bandsägegehäuse 4 ein unteres Antriebsrad 5 und ein oberes Umlenkrad 6 auf, über welches ein umlaufendes, endloses Sägewerkzeug 7 gespannt und angetrieben ist. Das in vertikaler Richtung (Z-Achse) sich bewegende Sägewerkzeug kann ein diamant- oder hartmetallbestücktes Schneidzahn-Sägeblatt oder ein diamantbestücktes Sägeseil sein, wie es in der Beschreibungseinleitung erwähnt ist. Dabei kann ein Schneidzahn-Sägeblatt - wie in Fig. 1 dargestellt - in X-Richtung schneiden. Ein Sägeseil kann aufgrund seiner geometrischen Gegebenheiten in alle Richtungen einer Horizontalebene schneiden.

In Fig. 2 ist unterhalb der Bandsäge 2 eine Draufsicht der Bewegungsachsen dargestellt. Die X-Achse verläuft deshalb in Fig. 2 in die Blattebene hinein. Die Bandsäge 2 ist demnach auf einer X-Y-Kreuztischführung 8 angeordnet, um die Beweglichkeit in einer Horizontalebene in allen Richtungen zu gewährleisten. Gemäß der Darstellung in Fig. 1 kann sie zusätzlich auf einem Drehteller 9 angeordnet sein, um eine Beweglichkeit um die Z-Achse (Pfeil 10) zu gewährleisten. Auf dem Drehteller 9 selbst ist das Maschinengestell 11 für die Bandsäge 2 auf einer weiteren Längsführung 12 in Y-Richtung längs verschiebbar angeordnet. Hierdurch kann die Bandsäge 2 exzentrisch vom Mittelpunkt 13 des Drehtellers 9 verschoben werden.

Der Bearbeitungstisch 3 weist zur Aufnahme des Werkstücks eine Bearbeitungsplattform 14 auf, die ihrerseits auf einer weiteren X-Y-Kreuztischführung 15 gelagert ist. Dies ist in Fig. 2 schematisch in Seitenansicht dargestellt. Fig. 3 zeigt die Draufsicht auf die Bearbeitungsplattform bzw. den Bearbeitungstisch 3, 14 mit dem angegebenen Koordinatenkreuz X-Y für die entsprechende Bewegung. Die Bearbeitungsplattform ist auch um die Z-Achse drehbar (Pfeil 16) und in Richtung der Z-Achse (Pfeil 17) höhenverstellbar angeordnet. Damit ist auch das auf der Bearbeitungsplattform 14 angeordnete Werkstück höhenverstellbar und mittels der X-Y-Kreuztischführung in einer horizontalen Ebene verschiebbar angeordnet. Wie in Fig. 2 dargestellt, kann die Bearbeitungsplattform zusätzlich gegenüber der Z-Achse, beispielsweise um einen Winkel $\alpha$, in allen Richtungen gekippt oder geschwenkt werden. Hierfür ist ein Schwenklager 18 zur Durchführung dieser Bewegung vorgesehen. Das Werkstück kann damit in eine schräge Ebene 19, 19' gelegt werden. Dabei kann sich die Mittelachse 20 der Bearbeitungsplattform auf einer Kegelmantelfläche mit dem Kegelwinkel 2 x $\alpha$ bewegen.

Erfindungsgemäß wird an das obere Gehäuseteil 4' eine zusätzliche Bearbeitungseinheit 21 stirnseitig in Y-Richtung angeflanscht, wobei ein Teleskoparm 22 einen in der Länge $l_1$ variablen Abstand zwischen der Stirnseite 23 und der vertikalen Bearbeitungslängsachse 24 herstellt. Über einen Zahnrad-Zahnstangenantrieb 25 ist die Bearbeitungseinheit 21 in vertikaler Richtung (Z-Achse) verschiebbar (Pfeil 26). Über ein nur schematisch angedeutetes Drehgelenk kann die Bearbeitungseinheit insgesamt um die Y-Achse (Pfeil 28) gedreht werden. Hierdurch kann die Bearbeitungseinheit als Mehrfachwerkzeugeinheit, z. B. als Revolverkopf, ausgebildet sein, wobei die Drehachse 29 in Y-Richtung zeigt. In Figuren 1 und 2 ist ein Zweifachwerkzeug als Bearbeitungseinheit 21 dargestellt, mit einem unteren Fingerfräser 30 und einem oberen Walzenfräser 31. Anstelle dieser beiden Werkzeuge 30, 31 kann auch ein Bohrer 30 oder ein Kreissägeblatt 31 verwendet werden. Durch die Aufwärtsbewegung über den Antrieb 25 der Bearbeitungseinheit oder die Aufwärtsbewegung 17 der Bearbeitungsplattform für das Werkstück können Werkzeug und Werkstück in Z-Richtung zueinander gefahren werden. Gleichzeitig kann der Teleskoparm 22 in Y-Richtung (Pfeil 32) aus- oder einfahren.

Neben der Drehbewegung der Bearbeitungseinheit 21 um die Längsachse 29 (Pfeil 28) kann die Bearbeitungseinheit auch noch um die Vertikalachse (Z-Achse) 24 gekippt werden. Dies ist mit Pfeil 39 in Figuren 1 und 2 dargestellt. Hierdurch kann die Bearbeitungseinheit (21) in einem Winkel $\beta$ gegen das Werkzeug verfahren werden. Ähnlich wie zum Winkel $\alpha$ beschrieben, kann dabei der Winkel $\beta$ ebenso auf einer umlaufenden Kegelmantelfläche zur Herstellung einer rotierenden Kegelbewegung angeordnet sein.

Die vorstehenden Betrachtungen der Bewegungsachsen gelten natürlich ausgehend von einem gemeinsamen Achsenkreuz für die Bandsäge 2 und den Bearbeitungstisch 3. Sobald die Bandsäge mittels des Drehtellers 9 um die Z-Achse verdreht wird (Pfeil 10), kommen die Bearbeitungsachsen der Bearbeitungseinheit in einer anderen Ebene als die Blattebene in Fig. 2 zum Einsatz. Die Koordinatensysteme der einzelnen Bestandteile fallen deshalb nicht immer zusammen.

Eine weitere Ausgestaltung der Erfindung ist in Fig. 3 als Draufsicht auf den Bearbeitungstisch 3 bzw. Bearbeitungsplattform 14 dargestellt. In besonderen Fällen kann es zweckmäßig sein, ein dort angedeutetes Werkstück 33 in ein Backenfutter 34 eines Antriebsmotors 35 einzuspannen und hierfür ein Gegenlager oder Reitstock 36 zur Gegenlagerung vorzusehen. Das Werkstück 33 kann sich dann um die Längsachse 37 drehen (Pfeil 38), wobei insbesondere eine Drehung in Teilschritten mittels eines Teileapparates vorgesehen sein kann.

Die erfindungsgemäße Bandsägemaschine ist deshalb als Universal-Bearbeitungsmaschine für entsprechende Werkstücke ausgebildet. Sie ermöglicht damit außerordentlich interessante Bearbeitungsmöglichkeiten an derartigen Werkstücken, wobei ein Sägen, Bohren, Fräsen oder auch Schleifen mit entsprechenden Werkzeugen 7, 30, 31 in allen Richtungen verschiedener Koordinatenkreuze möglich ist. Eine Drehung des Werkstücks selbst kann mittels der Antriebseinrichtung 35, 36 erfolgen.

Sämtliche zuvor beschriebenen Bewegungsachsen können manuell betätigt oder auch numerisch angetrieben sein. Als numerisch angetriebene Achsen sind insbesondere die Bewegungen der Bandsäge 2, der Bearbeitungsplattform 14 sowie der Bearbeitungseinheit 21 vorgesehen.

Die Erfindung ist nicht auf das dargestellte und beschriebene Ausführungsbeispiel beschränkt. Sie umfaßt auch vielmehr alle fachmännischen Weiterbildungen im Rahmen des erfindungsgemäßen Kerngedankens.

**Patentansprüche**

1. Sägemaschine, insbesondere Bandsägemaschine zur Bearbeitung von schweren Natursteinblöcken o. dgl., mit einem Bearbeitungstisch (3) bzw. einer Bearbeitungsplattform (14) zur Werkstückauflage, und mit einer Bandsäge (2) oder einem Sägeseil (2) mit einem unteren (5) und einem oberen (6) Antriebs- bzw. Umlaufrad (5, 6) in einem Bandsägegehäuse (4), über welche ein umlaufendes, endloses Sägeblatt (7) oder Sägeseil (7) geführt ist, wobei die Bandsäge (2) zur Durchführung einer Längsbewegung (X-Achse) und einer Querbewegung (Y-Achse) auf einer Kreuztischführung (8) in einer horizontalen Ebene verschiebbar gelagert ist, dadurch gekennzeichnet, daß an dem oberen Gehäuseteil (4') des Bandsägegehäuses (4) wenigstens eine zusätzliche, selbst angetriebene Bearbeitungseinheit (21) angeflanscht ist, die wenigstens ein weiteres Bearbeitungswerkzeug (30, 31) aufweist.

2. Bandsägemaschine nach Anspruch 1, dadurch gekennzeichnet, daß die Bearbeitungseinheit (21) mit einer Einzelwerkzeug- oder Mehrfachwerkzeugaufnahme (z. B. Revolverkopf) ausgebildet ist, wobei verschiedene Bearbeitungswerkzeuge (30, 31) durch eine Drehbewegung um eine horizontale Achse (29) (Pfeil 28) in eine vertikale Arbeitsstellung (Z-Achse) einstellbar sind.

3. Bandsägemaschine nach Anspruch 1 oder 2, dadurch gekennzeichnet, daß die Bearbeitungseinheit (21) über einen Teleskoparm (22) in horizontaler Richtung (Pfeil 32) längs verfahrbar ist.

4. Bandsägemaschine nach einem oder mehreren der Ansprüche 1 bis 3, dadurch gekennzeichnet, daß die Bearbeitungseinheit (21) und/oder die Bearbeitungsplattform (14) in Z-Richtung vertikal verfahrbar ist (Pfeil 26, 17).

5. Bandsägemaschine nach einem oder mehreren der vorhergehenden Ansprüche, dadurch gekennzeichnet, daß die Bearbeitungseinheit (21) ein Aufnahmefutter für ein Bohr-und/oder für ein Fräswerkzeug aufweist.

6. Bandsägemaschine nach einem oder mehreren der vorhergehenden Ansprüche, dadurch gekennzeichnet, daß die Bearbeitungseinheit (21) und/oder die Bearbeitungsplattform (14) um die vertikale Achse (Z-Achse) in einer Vertikalebene oder auf einer Kegelmantelfläche um einen Winkel ($\alpha$, $\beta$) schwenkbar gelagert ist (Pfeil 39).

7. Bandsägemaschine nach einem oder mehreren der vorhergehenden Ansprüche, dadurch gekennzeichnet, daß die Bearbeitungsplattform (14) des Bearbeitungstisches (3) mittels einer X-Y-Kreuztischführung (15) in einer horizontalen Ebene verfahrbar und - ggf. mittels eines Antriebs - in Z-Richtung (Pfeil 17) höhenverstellbar und ggf. drehbar (Pfeil 16) gelagert ist.

8. Bandsägemaschine nach einem oder mehreren der vorhergehenden Ansprüche, dadurch gekennzeichnet, daß der Antrieb der Bewegungsrichtungen der Bandsäge (4) und/oder der Bearbeitungseinheit (21) und/oder der Bearbeitungsplattform (14) in einer oder mehreren der Bewegungsachsen teilweise oder ganz manuell oder teilweise oder ganz mittels eines numerischen Antriebs (CNC-Steuerung) erfolgt.

9. Bandsägemaschine nach einem oder mehreren der vorhergehenden Ansprüche, dadurch gekennzeichnet, daß das Werkstück (33) in ein Backenfutter (34) einer Dreheinheit oder Teileeinheit (35) ggf. mit Gegenlager (Reitstock) (36) einspannbar ist, wobei die Werkstückdrehachse (37) in X-Richtung und/oder in Y-Richtung ausgerichtet ist.

10. Bandsägemaschine nach einem oder mehreren der vorhergehenden Ansprüche, dadurch gekennzeichnet, daß die Bandsäge (2) auf einem Drehteller (9) und vorzugsweise in Längsrichtung (Pfeil 40) verschiebbar angeordnet ist und daß der Drehteller (9) auf der X-Y-Kreuztischführung (8) angeordnet ist.

Fig 1

Fig 2

Fig 3

EP 0 516 071 A2

7